# FASCICULE DE BREVET EUROPEEN

(11) **EP 4 064 636 B1**
(45) Date de publication et mention de la délivrance du brevet: **01.10.2025**
(21) Numéro de dépôt: 21305364.8
(22) Date de dépôt: 24.03.2021
(51) Int. Cl.: G06F 9/50

(54) **PROCÉDÉ, DISPOSITIF ET SYSTÈME DE COMMUNICATION, AVEC RUPTURE DE PROTOCOLE, ENTRE DES ÉQUIPEMENTS DE ZONES DE SÉCURITÉ DIFFÉRENTES**
VERFAHREN, VORRICHTUNG UND SYSTEM ZUR KOMMUNIKATION MIT PROTOKOLLUNTERBRECHUNG ZWISCHEN GERÄTEN IN UNTERSCHIEDLICHEN SICHERHEITSZONEN
METHOD, DEVICE AND COMMUNICATION SYSTEM, WITH BREAK OF PROTOCOL, BETWEEN EQUIPMENT FROM DIFFERENT SECURITY AREAS

(43) Date de publication de la demande: 28.09.2022
(73) Titulaire: Worldgrid France SAS, 95870 Bezons (FR)
(72) Inventeur: ANTHOINE, Jacques, 74330 SILLINGY (FR); ETIENNE, Franck, 38134 LA SURE EN CHARTREUSE (FR); TINARD, Cédric, 38610 GIÈRES (FR); BLANC, Sébastien, 38950 SAINT MARTIN LE VINOUX (FR); FOURNIER, Jacques, 38400 SAINT MARTIN D'HÈRES (FR); PEBAY PEYROULA, François, 38180 SEYSSINS (FR)
(74) Mandataire: Novagraaf Technologies

(56) Documents cités:
- US-B1- 9 729 515
- US-B1- 9 979 699

## Description

La présente invention concerne un procédé de communication, avec rupture de protocole, entre des équipements se trouvant dans des zones de sécurité différentes. Elle concerne également un dispositif et un système configurés pour mettre en œuvre un tel procédé.

Le domaine de l'invention est, de manière non limitative, le domaine des procédés de communication entre des équipements de zones de sécurité différentes.

### État de la technique

Les systèmes industriels anciens ou récents ont besoin de s'ouvrir et de s'interconnecter avec d'autres systèmes ou d'autres réseaux informatiques externes. Ces systèmes cohabitent, communiquent, échangent des données et informations métiers via des canaux de communications sûrs et moins sûrs, maîtrisés ou non. Ces systèmes peuvent être exposés à des risques liés à la sécurité informatique et peuvent être des cibles privilégiées d'attaques ou de menaces cybercriminelles.

En réponse à ce type de menaces, il est prévu de définir des zones de sécurité au sein d'un système informatique industriel, de sorte que les communications sont libres entre les différents équipements d'une même zone de sécurité et les communications sont contrôlées, voire interdites, entre différents équipements situés dans des zones différentes. Les différentes zones sont séparées par des dispositifs de séparation de zones tels que des diodes logicielles, ou des dispositifs de rupture de protocoles.

Cependant, ces dispositifs de séparation de zones de sécurité sont incompatibles avec certains protocoles industriels, tel que par exemple le protocole OPC-UA (pour « Open Platform Communications Unified Architecture »). Par exemple, les diodes logicielles ne permettent qu'un flux de données monodirectionnel, et les dispositifs de rupture de protocole sont incompatibles avec le protocole OPC-UA. Ainsi, les solutions connues ne permettent pas la sécurisation d'un protocole de communication industriel client/serveur entre des équipements de différentes zones de sécurité.

Un but de la présente invention est de remédier à au moins un des inconvénients précités.

Un autre but de la présente invention est de proposer une solution permettant une communication client/serveur sécurisée entre des équipements de différentes zones de sécurité.

Un autre but de la présente invention est de proposer une solution permettant une communication sécurisée compatible avec les protocoles de communication industriels client/serveur connus, par exemple de type OPC-UA.

Un autre but de la présente invention est de proposer une solution permettant une communication selon un protocole de communication client/serveur pouvant être mise en place à la volée et facilement adaptable aux niveaux de sécurité protocolaire des équipements dans différentes zones de sécurité. Les documents US9979699 et US9729515 font partie de l'état de l'art.

### Exposé de l'invention

L'invention est définie par les revendications indépendantes. L'invention permet d'atteindre au moins l'un de ces buts par un procédé de communication client/serveur entre une première zone de sécurité comprenant au moins un équipement, dit premier équipement, et une deuxième zone de sécurité comprenant au moins un équipement, dit deuxième équipement, ledit procédé comprenant les étapes suivantes réalisées au sein d'un dispositif de communication externe auxdits équipements et intercalées entre lesdites zones de sécurité :
- instanciation, au niveau d'une machine, dite première machine, d'un serveur de communication, dit premier serveur de communication, associé à ladite première zone de sécurité, et compatible avec un niveau de sécurité protocolaire de chacun des premiers équipements se trouvant dans ladite première zone de sécurité, puis
- lorsqu'un premier équipement de ladite première zone de sécurité émet une requête de communication avec un deuxième équipement de ladite deuxième zone de sécurité, instanciation, au niveau d'une deuxième
machine, d'un client de communication, dit deuxième client de communication, dédié audit deuxième équipement, de niveau de sécurité compatible avec un niveau de sécurité protocolaire dudit deuxième équipement, en communication avec ledit premier serveur de communication au travers d'un canal de communication utilisant un protocole de communication prédéterminé, dit interne.

Autrement dit, l'invention propose d'instancier un premier serveur de communication associé à la première zone de sécurité et qui peut être utilisé par tous les premiers équipements de la première zone de sécurité. Pour ce faire, le niveau de sécurité protocolaire dudit premier serveur de communication est compatible avec le niveau de sécurité protocolaire de chaque premier équipement de la première zone de sécurité. Dans les faits, le niveau de sécurité protocolaire dudit premier serveur de communication correspond à celui des premiers équipements ayant la sécurité la plus faible pour les critères de signature, chiffrement et types de clés (certificats), dans la première zone de sécurité.

Ensuite, lorsqu'un premier équipement se trouvant dans la première zone de sécurité souhaite communiquer avec un deuxième équipement se trouvant dans la deuxième zone de sécurité, alors un client de communication est instancié individuellement pour ce deuxième équipement. Ce client de communication est dédié à ce deuxième équipement et n'est utilisé que pour communiquer avec ce deuxième équipement. Ce deuxième client de communication présente une sécurité protocolaire identique, ou du moins compatible, avec le niveau de sécurité protocolaire de ce deuxième équipement.

Ainsi, potentiellement, chaque premier équipement de la première zone de sécurité peut communiquer avec chaque deuxième équipement de la deuxième zone de sécurité en utilisant :
- toujours le même serveur, à savoir le premier serveur de communication, du côté de la première zone de sécurité, et
- un deuxième client de communication instancié à la volée pour chaque deuxième équipement de la deuxième zone sécurité.

Dans cette configuration, le procédé selon l'invention permet de faire communiquer un premier et un deuxième équipement se trouvant dans des zones de sécurité différentes et utilisant des niveaux de sécurité protocolaires différents. Autrement dit, le niveau de sécurité protocolaire entre le premier équipement et le premier serveur de communication peut être différent du niveau de sécurité protocolaire utilisé entre le deuxième client de communication et le deuxième équipement. Selon d'autres termes, l'invention propose un procédé permettant à un équipement d'une zone de sécurité de communiquer avec un équipement d'une autre zone de sécurité de manière sécurisée et adaptée aux niveaux de sécurité protocolaire de chacun des deux équipements.

Ainsi, le procédé selon l'invention réalise une rupture du protocole de communication de sorte que chacun des premier et deuxième équipements continue d'utiliser son propre protocole de communication, qui peut être différent du protocole de communication de l'autre équipement.

L'invention propose en outre une solution compatible avec les protocoles de communication industriels client/serveur, tel que par exemple le protocole OPC-UA ou Modbus/TCP, ou des protocoles de type Provider (émetteur) / Consumer (destinataire), comme Ethernet/IP. En effet, la solution proposée permet l'envoie et la réception de messages d'acquittement protocolaire, contrairement aux solutions de séparation de zones de sécurité actuellement connues. Ainsi, le procédé de communication selon l'invention peut utiliser l'un quelconque de ces protocoles pour communiquer avec au moins un, en particulier, chaque équipement.

De plus, l'invention propose une solution, permettant à un premier équipement de la première zone de sécurité d'être mis en communication à la volée avec tout autre deuxième équipement de la deuxième zone de sécurité, de manière sécurisée et adaptée aux niveaux de sécurité protocolaire du premier et du deuxième équipement. En effet, l'instanciation d'un client de communication peut être réalisée de manière rapide et sur demande.

Selon un mode de réalisation, le requête de communication peut comprendre un identifiant, dite de communication, fourni au dispositif de communication et relatif à la communication à établir.

Selon un premier exemple de réalisation, l'identifiant de communication permet d'identifier à la fois le premier équipement et le deuxième équipement avec lequel ledit premier équipement souhaite communiquer, par exemple par consultation d'un fichier de configuration fourni au dispositif de communication. Dans ce cas, un identifiant de communication correspond à un couple (premier équipement, deuxième équipement).

Selon un autre exemple de ce mode de réalisation, l'identifiant permet au dispositif de communication d'identifier uniquement le premier équipement. Dans ce cas, le premier équipement ne peut communiquer qu'avec un deuxième équipement, ce dernier étant identifié par consultation du fichier de configuration.

Alternativement, la requête de communication peut comprendre un identifiant du premier équipement et un identifiant du deuxième équipement avec lequel il souhaite communiquer.

Dans la présente invention, par « équipement » on entend tout équipement capable de communiquer avec un autre équipement au sein d'un réseau de communication et externe au dispositif de communication.

Par « niveau de sécurité protocolaire » on entend le niveau de sécurité protocolaire auquel est soumis un équipement. Deux équipements soumis à deux niveaux de sécurité protocolaire différents peuvent se trouver dans une même zone de sécurité. Un niveau de sécurité protocolaire est défini par des règles de sécurité relatives par exemple à la nature de données, au chiffrement des données utilisées, etc.

Par « instanciation » au niveau de la première machine, d'un premier serveur de communication, associé à ladite première zone de sécurité, on entend une instanciation au niveau de la première machine d'un serveur ayant un niveau de sécurité égal ou inférieur au niveau de sécurité protocolaire le plus faible dans la première zone de sécurité de sorte qu'il peut communiquer avec chaque premier équipement de ladite première zone de sécurité.

Par « instanciation » au niveau de la deuxième machine, d'un deuxième client de communication compatible avec le niveau de sécurité d'un deuxième équipement on entend une instanciation au niveau de la deuxième machine d'un client ayant un niveau de sécurité protocolaire égal ou inférieur audit niveau de sécurité protocolaire du deuxième équipement.

Dans la présente demande, les termes premier, deuxième, etc. sont utilisés pour différencier des équipements, des machines, des serveurs de communication ou des clients de communication, les uns des autres. Ces termes sont utilisés par souci de clarté et de concision, pour éviter des lourdeurs rédactionnelles, sans perte de généralité, et de manière nullement limitative.

Avantageusement, le premier serveur de communication peut être un serveur de communication, dit commun, prévu pour être en communication avec plusieurs, préférentiellement tous les, premiers équipements se trouvant dans la première zone de sécurité et compatible avec le niveau de sécurité protocolaire le plus bas parmi les niveaux de sécurité protocolaire utilisés par lesdits premiers équipements de ladite première zone de sécurité.

Ainsi, le procédé selon l'invention permet l'instanciation d'un serveur commun adapté au niveau de sécurité de l'ensemble des premiers équipements d'une même zone de sécurité. Par conséquent, une fois instancié, un tel serveur commun peut être réutilisé afin de mettre en communication un autre premier équipement de la première zone de sécurité avec un autre équipement d'une autre zone de sécurité.

Le premier serveur de communication peut être instancié à tout moment avant la réception, par le dispositif de communication, d'une première requête de communication provenant de la première zone de sécurité. Par exemple, le premier serveur de communication peut être instancié au moment de l'activation ou du démarrage du dispositif de communication.

Avantageusement, le procédé selon l'invention peut comprendre une instanciation de plusieurs deuxièmes clients de communication, chacun :
- associé à un deuxième équipement de la deuxième zone de sécurité, et
- d'un niveau de sécurité protocolaire compatible avec le niveau de sécurité protocolaire dudit deuxième équipement ;
- en communication avec le premier serveur de communication ; en vue de mettre en communication un premier équipement de la première zone de sécurité avec ledit deuxième équipement de la deuxième zone de sécurité.

Les deuxièmes clients de communication peuvent être instanciés en même temps lorsque les communications sont simultanées.

Les deuxièmes clients de communication peuvent être instanciés de manière décalée, ou à tour de rôle, dans le temps lorsque les communications sont décalées, ou à tour de rôles.

Ainsi, le procédé selon l'invention permet l'établissement de plusieurs communications entre au moins un premier équipement de la première zone de sécurité et plusieurs deuxièmes équipements de la deuxième zone de sécurité, en utilisant un même serveur de communication du côté de la première zone de sécurité.

Au moins deux deuxièmes clients de communication peuvent être instancié au niveau de plusieurs deuxièmes machines.

Avantageusement, au moins deux, en particulier tous les, deuxièmes clients de communication peuvent être instanciés au niveau d'une même deuxième machine.

La première et la deuxième machine peuvent préférentiellement être des machines virtuelles.

Alternativement, la première et la deuxième machine peuvent être des machines physiques, reliées entre elles par un canal de communication filaire.

Avantageusement, le procédé selon l'invention peut en outre comprendre, au niveau du premier serveur de communication, respectivement d'au moins un deuxième client de communication, une étape de conversion d'un format d'au moins une donnée, de sorte à utiliser un format interne entre ledit serveur et ledit au moins un deuxième client de communication.

Ainsi, le procédé selon l'invention permet une rupture de protocole de communication en ce qui concerne la nature des données échangées permettant à deux équipements de deux zones de sécurité différentes de communiquer entre eux même lorsqu'ils utilisent des formats de données différents.

En effet, lors d'une communication entre un premier équipement et un deuxième équipement, lorsqu'une donnée envoyée dans un premier format par le premier équipement vers le deuxième équipement est reçue par le premier serveur de communication, cette donnée est convertie en un format interne au niveau dudit premier serveur de communication puis transmise au deuxième client de communication. Cette donnée au format interne est ensuite convertie au niveau du deuxième client de communication en un deuxième format utilisé par le deuxième équipement puis transmise audit deuxième équipement, et *vice versa.*

Avantageusement, le format de données interne peut être un format de données dans un langage autoportant, de type « Markup Language », ou langage de balisage, tel que JSON.

L'utilisation d'un langage autoportant ou langage de balisage permet d'alléger et de simplifier les communications entre le premier serveur et le deuxième client de communication, ainsi que le déploiement dudit premier serveur de communication et du deuxième client de communication.

L'utilisation d'un langage autoportant permet aussi de rendre plus léger, et donc de faciliter, le traitement de données par le premier serveur de communication ou le deuxième client de communication. Il est important de noter que le format autoportant est indépendant du protocole de communication entre les équipements et les machines.

Avantageusement, une configuration du premier serveur de communication, respectivement une configuration d'au moins un deuxième client de communication, au niveau d'une machine peut être réalisée en utilisant des données de configuration préalablement mémorisées.

Ainsi, il est possible de définir et mémoriser, pour la première zone de sécurité un fichier, ou des données, de configuration spécifique permettant de communiquer avec chaque équipement de ladite première zone de sécurité, de sorte qu'il est possible d'instancier le premier serveur de communication commun, associé à ladite première zone de sécurité, pour communiquer avec chacun des premiers équipements de ladite première zone de sécurité.

De plus, il est possible de définir et mémoriser, pour chaque deuxième équipement de la deuxième zone de sécurité un fichier, ou des données, de configuration spécifique permettant de communiquer avec ce deuxième équipement, de sorte qu'il est possible d'instancier un deuxième client de communication, pour communiquer avec ce deuxième équipement.

Un fichier, ou des données, de configuration du premier serveur de communication, respectivement d'un deuxième client de communication, peut être spécifique à un équipement avec lequel la communication est souhaitée et/ou à un équipement émettant la requête de communication.

Alternativement ou en plus, un fichier de configuration du premier serveur de communication, respectivement d'un deuxième client de communication, peut être spécifique à un niveau de sécurité auquel est soumis un équipement avec lequel la communication est souhaitée et/ou un équipement émettant la requête de communication.

Potentiellement, pour chaque équipement, il est possible de définir :
- un fichier de configuration d'un serveur de communication avec ledit équipement, et/ou
- un fichier de configuration d'un client de communication avec ledit équipement.

Un fichier de configuration peut comprendre des données relatives à :
- un protocole de communication à utiliser,
- une adresse de communication, telle qu'une adresse IP ;
- un port de communication,
- un niveau de chiffrement de données à utiliser,
- etc.

Par ailleurs, une communication entre deux équipements de zones de sécurités différentes peut être définie comme interdite ou autorisée.

Par exemple, lorsqu'un premier équipement émet une requête de communication avec un deuxième équipement et que la communication entre ces deux équipements est définie comme interdite, aucun client de communication n'est instancié.

Ainsi, le fichier, ou les données de configuration, peuvent permettre d'établir une liste, dite liste blanche, listant les communications autorisées entre équipements de différentes zones.

Les fichiers, ou données de configuration sont par exemple uniquement accessible par une machine lors de l'instanciation au niveau de ladite machine, du premier serveur de communication ou d'un deuxième client de communication. Ainsi, les fichiers, ou données de configuration de configuration ne sont plus accessible lorsque la communication entre les équipements débute.

De plus, les fichiers, ou données de configuration peuvent de préférence être accessible par chaque machine à l'aide d'un lien privé, propre à ladite machine et différent des canaux de communication utilisés pour l'échange des données entre les équipements.

Avantageusement, le procédé selon l'invention peut comprendre en outre une génération en fonction des données de configurations d'une table de routage définissant au moins une règle de routage de données entre le premier serveur et au moins un deuxième client de communication, lors d'une communication entre des équipements pour laquelle ledit serveur et ledit client de communication ont été instanciés.

Une table de routage peut être générée ou déduite en fonction des données de configurations par chaque serveur de communication, respectivement chaque client de communication, lorsqu'il est instancié.

Dans tout ce qui vient d'être décrit, on a considéré que les communications sont déclenchées par un premier équipement se trouvant dans la première zone de sécurité et cherchant à communiquer avec un deuxième équipement se trouvant dans la deuxième zone de sécurité.

Bien entendu, alternativement ou en plus, le procédé selon l'invention peut également être mise en œuvre pour une communication déclenchée par un deuxième équipement de la deuxième zone de sécurité pour communiquer avec un premier équipement de la première zone de sécurité. Dans ce cas, le procédé comprend une instanciation d'un deuxième serveur de communication commun à tous les deuxièmes équipements de la deuxième zone de sécurité pour permettre à chacun desdits deuxièmes équipements de communiquer avec un ou plusieurs premiers équipements de la première zone de sécurité. Dans ce cas, à l'instar du premier serveur de communication, ce deuxième serveur de communication est associé à ladite deuxième zone de sécurité et est commun à tous les deuxièmes équipements de la deuxième de sécurité. Ce deuxième serveur de communication présente un niveau de sécurité compatible avec un niveau de sécurité protocolaire de chacun des deuxièmes équipements se trouvant dans ladite deuxième zone de sécurité.

Ainsi, lorsqu'un deuxième équipement de ladite deuxième zone de sécurité émet une requête de communication avec un premier équipement de la première zone de sécurité, un deuxième client de communication associé à ce premier équipement de la première zone de sécurité est instancié à la volée. Ce premier client de communication est instancié avec un niveau de sécurité compatible avec le niveau de sécurité dudit premier équipement de la première zone de sécurité et est en communication avec le deuxième serveur associé à la deuxième zone de sécurité.

Toutes les caractéristiques qui ont été décrites plus haut en relation avec le premier serveur de communication, respectivement au, ou à chaque, deuxième client de communication, sont applicables *mutatis mutandis* au deuxième serveur de communication, respectivement au, ou à chaque, premier client de communication. Ces caractéristiques ne sont pas reprises ici par soucis de concision.

En outre, dans tout ce qui a été décrit précédemment, l'invention a été décrite en référence à deux zones de sécurité uniquement.

Bien entendu, l'invention n'est pas limitée aux communications entre deux zones de sécurité et peut être mise en œuvre pour des communications entre un nombre de zones « n », avec n≥2, dans les limites acceptables de puissance CPU, réseaux et mémoire système. Dans ce cas, les zones de sécurités sont considérées deux à deux, et l'invention telle que décrite plus haut est mise en œuvre pour ces zones de sécurité.

Ainsi, pour permettre à un « i »ème équipements d'une zone de sécurité « i » de communiquer avec un « j »ième équipement d'une de sécurité « j », un « i »ème serveur de communication associé à la zone « i » et commun à tous les équipements de la zone « i » est instancié. Lorsqu'un « i »ème équipement de la zone de sécurité « i » émet une requête de communication avec un « j »ième équipement de la zone de sécurité « j », alors un « j »ième client de communication dédié à ce « j »ième équipement de la zone « j » est instancié à la volée.

Selon un autre aspect de l'invention, il est proposé un dispositif de communication client/serveur entre une première zone de sécurité et comprenant au moins un équipement, dite premier équipement, et une deuxième zone de sécurité comprenant au moins un équipement, dit deuxième équipement, ledit dispositif comprenant :
- une première machine en communication avec ladite première zone de sécurité,
- au moins une deuxième machine en communication avec ladite deuxième zone de sécurité,
- au moins un canal de communication entre lesdites première et deuxième machines ;
configurés pour mettre en œuvre toutes les étapes du procédé selon l'invention.

De manière générale, le dispositif selon l'invention peut comprendre des moyens pour mettre en œuvre chacune des caractéristiques décrites plus haut en référence au procédé selon l'invention, et qui ne sont pas reprises ici par soucis de concision.

Le dispositif de communication selon l'invention peut être un unique appareil tel qu'un serveur, un ordinateur, etc. Alternativement, le dispositif de communication peut comprendre plusieurs appareils, reliés entre eux par une liaison physique de préférence filaire. Par exemple, le dispositif selon l'invention peut comprendre un appareil physique associé à chaque zone et prévu pour héberger le serveur de communication associé à ladite zone et les clients de communication instancié pour les équipements de ladite zone.

Selon un exemple de réalisation, le dispositif selon l'invention peut comprendre une carte réseau associé à chaque zone de sécurité, et dédiée aux communications avec ladite zone de sécurité.

Selon un exemple de réalisation, au moins une des machines sur laquelle est instancié un serveur de communication, ou un client de communication, peut être une machine physique.

Alternativement, au moins une, en particulier chaque, machine peut être une machine virtuelle.

Dans ce cas, plusieurs machines peuvent être hébergées sur un même appareil physique. Alternativement, au moins deux machines virtuelles peuvent être mémorisées sur des appareils physiques différents.

Selon un exemple de réalisation, chaque machine, virtuelle ou physique, comporte une carte réseau séparée qui lui est propre, même lorsque lesdites machines sont des machines virtuelles hébergées sur un même appareil physique.

Tous les clients de communications instanciés pour des équipements d'une zone de sécurité peuvent être instanciés sur une même machine, physique ou virtuelle.

Pour une zone de sécurité, le serveur de communication commun peut être instanciée sur une même machine que le ou les clients de communications instanciés pour les équipements de cette zone de sécurité.

Alternativement, ou en plus, pour une zone de sécurité, le serveur de communication commun peut être instanciée sur une machine différente de celle sur laquelle est instancié le ou les clients de communications pour les équipements de cette zone de sécurité.

Selon un autre aspect de l'invention, il est proposé un système de communication comprenant :
- au moins un premier équipement se trouvant dans une première zone de sécurité et communicant selon un premier niveau de sécurité protocolaire, et au moins un deuxième équipement se trouvant dans une deuxième zone de sécurité et communicant selon un deuxième niveau de sécurité protocolaire, et
- un dispositif de communication selon l'invention.

### Description des figures et modes de réalisation

D'autres avantages et caractéristiques apparaîtront à l'examen de la description détaillée d'un mode de réalisation nullement limitatif, et des dessins annexés sur lesquels
- la FIGURE 1 est une représentation schématique d'un exemple de réalisation non limitatif d'un procédé selon l'invention ;
- la FIGURE 2 est une représentation schématique d'un autre exemple de réalisation non limitatif d'un procédé selon l'invention ;
- la FIGURE 3 est une représentation schématique d'un exemple de réalisation non limitatif d'un dispositif selon l'invention ; et
- les FIGURES 4a à 4c sont des représentations schématiques d'un exemple de réalisation non limitatif d'un système selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures les éléments communs à plusieurs figures conservent la même référence.

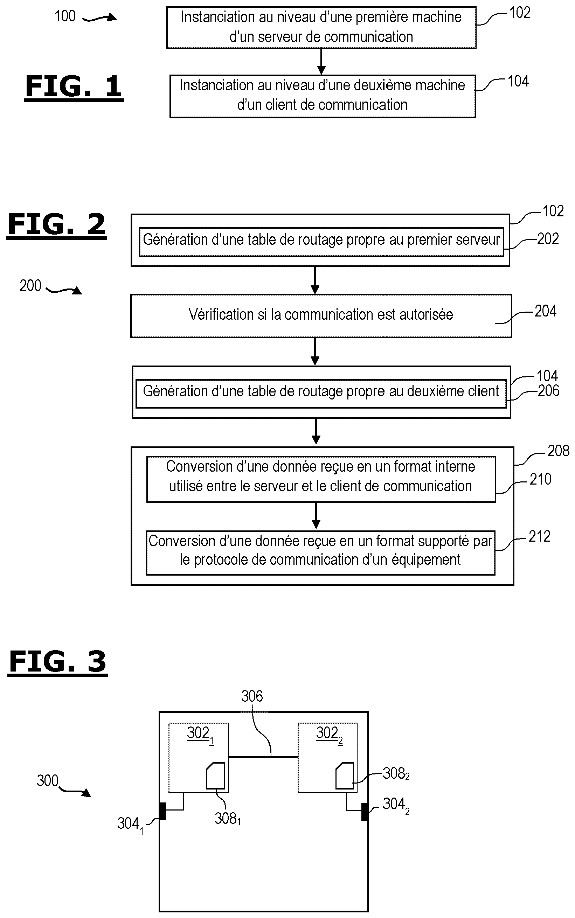

La FIGURE 1 est une représentation schématique d'un exemple de réalisation non limitatif d'un procédé selon l'invention.

Le procédé 100 est un procédé de communication d'un premier équipement se trouvant dans une première zone de sécurité et communicant selon un premier niveau de sécurité protocolaire, et un deuxième équipement se trouvant dans une deuxième zone de sécurité et communicant selon un deuxième niveau de sécurité protocolaire, différent dudit premier niveau de sécurité protocolaire.

Le procédé 100 comprend les étapes suivantes réalisées au sein d'un dispositif de communication externes audits équipements :
- une étape d'instanciation 102, au niveau d'une première machine d'un premier serveur de communication, associé à ladite première zone de sécurité, et compatible avec un niveau de chacun des équipements se trouvant dans ladite première zone de sécurité, puis
- lorsqu'un premier équipement de ladite première zone de sécurité émet une requête de communication avec un deuxième équipement de ladite deuxième zone de sécurité, une étape d'instanciation 104, au niveau d'une deuxième machine, d'un client de communication, dit deuxième client de communication, de niveau de sécurité compatible avec ledit deuxième niveau de sécurité protocolaire et en communication avec ledit deuxième équipement. Ce deuxième client de communication est en outre prévu pour communiquer avec ledit premier serveur de communication, au travers d'un canal de communication utilisant un protocole de communication prédéterminé, dit interne.

Autrement dit, le procédé 100 réalise une rupture de protocole de communication car le niveau de sécurité protocolaire entre le premier équipement et le premier serveur de communication est différent du niveau de sécurité protocolaire utilisé entre le deuxième client de communication et le deuxième équipement. Ainsi, le procédé 100 permet à un équipement d'une zone de sécurité de communiquer avec un équipement d'une autre zone de sécurité de manière sécurisée et adaptée aux niveaux de sécurité protocolaire de chacun des deux équipements.

Le premier serveur de communication et le deuxième client de communication sont configurés lors des étapes d'instanciation 102 et 104 en utilisant des données de configuration préalablement mémorisées. Ces données peuvent préférentiellement être mémorisées dans un ou plusieurs fichiers configuration mémorisés dans une machine physique sur laquelle est instancié le premier serveur de communication, respectivement le deuxième client de communication.

La FIGURE 2 est une représentation schématique d'un autre exemple de réalisation non limitatif d'un procédé selon l'invention.

Le procédé 200 comprend l'intégralité des étapes du procédé 100 décrit en relation avec la FIGURE 1.

L'étape 102 d'instanciation du premier serveur de communication du procédé 200 comprend en outre une étape 202 de génération en fonctions de données de configurations d'une table de routage propre au premier serveur de communication et définissant au moins une règle de routage de données au niveau du premier serveur de communication.

Le procédé 200 comprend en outre, lorsqu'un premier équipement de ladite première zone de sécurité émet une requête de communication avec un deuxième équipement de ladite deuxième zone de sécurité, en amont de l'étape 104 d'instanciation d'un deuxième client de communication, une étape de vérification 204, à l'aide de données de configuration, d'une autorisation ou non d'une communication entre le premier et le deuxième équipement.

Ainsi, suite à l'émission d'une requête de communication par le premier équipement, l'instanciation d'un deuxième client de communication n'est effectuée que lorsque cette communication est identifiée comme autorisée. Si la communication n'est pas autorisée, le procédé 200 prend fin.

L'étape 104 d'instanciation d'un deuxième client de communication comprend en outre une étape 204 de génération en fonctions de données de configurations d'une table de routage propre au deuxième client de communication définissant au moins une règle de routage de données au niveau du deuxième client de communication.

Le procédé 200 comprend ensuite au moins une itération d'une étape 208 de communication entre le premier et le deuxième équipement. Chaque itération de l'étape 208 comprend :
- une étape 210 de conversion d'une donnée reçue au niveau du premier serveur de communication et provenant du premier équipement, respectivement au niveau du deuxième client de communication et provenant du deuxième équipement, en un format interne utilisé entre le premier serveur et le deuxième client de communication,
- une étape 212 de conversion d'une donnée reçue au niveau du deuxième client de communication et provenant du premier serveur de communication, respectivement au niveau du premier serveur de communication et provenant du deuxième client, en un format supporté par le protocole de communication du deuxième équipement, respectivement du premier équipement.

La FIGURE 3 est une représentation schématique d'un exemple de réalisation non limitatif d'un dispositif selon l'invention.

Le dispositif de communication 300 est un dispositif permettant de mettre en œuvre chacun des procédés 100 et 200 décrits précédemment en relation avec les FIGURES 1 et 2. Ce dispositif 300 est ainsi prévu pour faire communiquer un premier équipement se trouvant dans une première zone de sécurité et communicant selon un premier niveau de sécurité protocolaire, avec au moins un deuxième équipement se trouvant dans une deuxième zone de sécurité et communicant selon un deuxième niveau de sécurité protocolaire, différent dudit premier niveau de sécurité protocolaire.

Le dispositif de communication 300 comprend deux machines 302₁ et 302₂ au niveau desquelles un premier serveur de communication, respectivement un deuxième client de communication, peut être instancié. Le dispositif comprend en outre deux cartes réseau séparées, à savoir une carte réseau 304₁ permettant au dispositif 300 de communiquer avec une première zone de sécurité et une carte réseau 304₂ au dispositif 300 de communiquer avec une deuxième zone de sécurité. Autrement dit, chaque carte réseau 304₁ et 304₂ est dédié aux communications avec une zone de sécurité.

Dans la suite, la référence 302ᵢ peut désigner l'une quelconque des machines 302₁-302₂. La référence 304ᵢ peut désigner l'une quelconque des carte réseau 304₁-304₂.

Le dispositif 300 comprend en outre un canal de communication 306 permettant de mettre en communication la première machine 302₁ à la deuxième machine 302₂. Bien qu'un unique canal de communication 306 est illustré en FIGURE 3, un dispositif selon l'invention peut comprendre un plus grand nombre de canaux de communication entre la première machine 302₁ et la deuxième machine 302₂.

Le dispositif 300 comprend en outre, pour chaque machine 302ᵢ au moins un moyen de mémorisation (non illustré) permettant de stocker des données de configuration permettant la configuration d'un serveur de communication, respectivement d'un client de communication, lors de son instanciation au niveau d'une machine 302ᵢ.

Alternativement, chaque machine 302ᵢ mémorise des données de configurations qui lui sont fournies au moment de la configuration du dispositif de communication 300. Ces données sont ensuite utilisées pour générer une table de routage propre à chaque serveur ou client de communication instancié au niveau de ladite machine. Dans l'exemple illustré en FIGURE 3, les données de configurations mémorisées par la première machine 302₁ sont schématiquement représentés par le fichier 308₁, respectivement les données de configurations mémorisées par la deuxième machine 302₂ sont schématiquement représentés par le fichier 308₂.

Dans le dispositif 300, au moins une des machines 302ᵢ peut être une machine physique. Alternativement, ou en plus, au moins une des machines 302ᵢ peut être une machine virtuelle.

Selon une autre alternative, chacune des machines 302ᵢ peut être une machine virtuelle. Dans ce cas, les machines 302ᵢ peuvent être hébergées sur un même appareil physique, ou sur des appareils physiques différents.

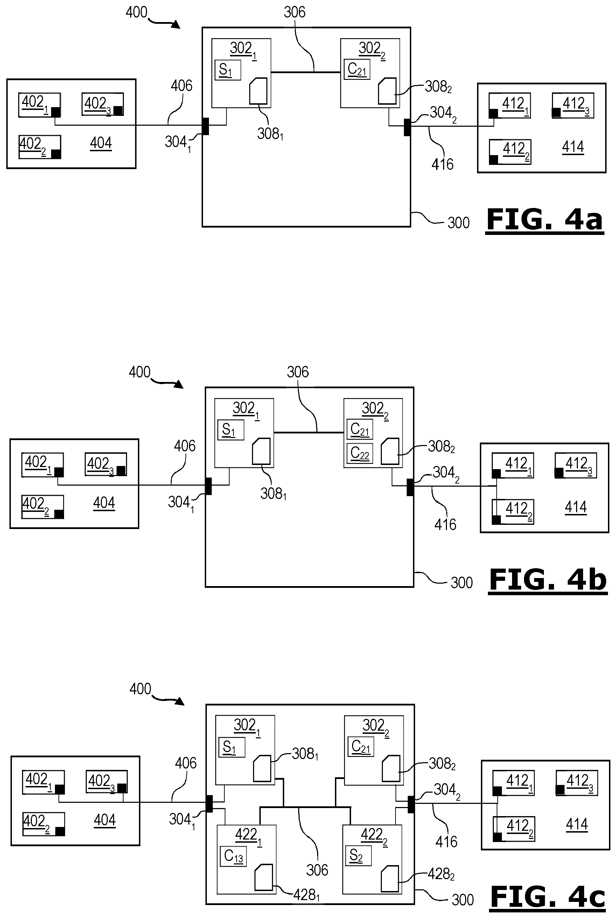

Les FIGURES 4a à 4c sont des représentations schématiques d'un de réalisation non limitatif d'un système de communication selon l'invention.

Le système de communication 400 des FIGURES 4a à 4c comprend le dispositif de communication 300 de la FIGURE 3.

Le système 400 comprend en outre trois équipements 402₁, 402₂ et 402₃ se trouvant dans une première zone de sécurité 404. Dans la suite, la référence 402ᵢ peut désigner l'un quelconque des équipements 402₁-402₃, également appelés premiers équipements 402₁-402₃.

Dans le système 400, le dispositif de communication 300 est relié à chaque premier équipement 402ᵢ de la première zone de sécurité 404 par une liaison de communication 406. Chaque premier équipement 402ᵢ peut communiquer avec le dispositif de communication 300 en utilisant un protocole de communication OPC-UA. Dans les exemples illustrés en FIGURES 4a à 4c, chaque premier équipement 402ᵢ comprend une carte réseau qui lui est propre lui permettant de communiquer avec le dispositif 300 via la liaison de communication 406.

Le système 400 comprend en outre trois autres équipements 412₁, 412₂ et 412₃, également appelés deuxièmes équipements, se trouvant dans une deuxième zone de sécurité 414. Dans la suite, la référence 412ᵢ peut désigner l'un quelconque des deuxièmes équipements 412₁-412₃.

Le système 400 comprend une liaison de communication 416 reliant la deuxième zone de sécurité 414 à la deuxième carte réseau 304₂ du dispositif de communication 300. Chaque deuxième équipement 412ᵢ peut communiquer avec le dispositif de communication 300 en utilisant un protocole de communication OPC-UA.

Dans les exemples illustrés en FIGURES 4a à 4c, chaque équipement 412ᵢ comprend une carte réseau qui lui est propre, lui permettant de communiquer avec le dispositif 300 via la liaison de communication 416.

Dans l'exemple illustré en FIGURE 4a, le premier équipement 402₁ de la première zone de sécurité 404 émet une requête de communication avec le deuxième équipement 412₁ de la deuxième zone de sécurité 414. Cette requête de communication est reçue au niveau du dispositif de communication 300. Puis :
- un premier serveur de communication S₁ compatible avec le niveau de sécurité du premier équipement 402₁ a été instancié au niveau de la première machine 302₁ du dispositif 300, et
- un deuxième client de communication C₂₁ compatible avec le niveau de sécurité du deuxième équipement 412₁ a été instancié au niveau de la deuxième machine 302₂ du dispositif 300.

Le premier serveur de communication S₁ est commun à tous les premiers équipements. Le deuxième client de communication C₂₁ est dédié au deuxième équipement 412₁ et ne peut être utilisé que pour communiquer avec ce deuxième équipement 412₁.

Le premier serveur de communication S₁ est en communication avec le premier équipement 402₁ au travers de la carte réseau 304₁ et de la liaison 406. Le deuxième client de communication C₂₁ est en communication avec le deuxième équipement 412₁ au travers de la carte réseau 304₂ et de la liaison 416. Le premier serveur de communication S₁ et le deuxième client de communication C₂₁ sont en communication entre eux au travers du canal de communication 306.

Ainsi, le premier équipement 402₁ peut communiquer avec le deuxième équipement 412₁ en utilisant le premier serveur S₁ et le deuxième client C₂₁.

Dans l'exemple illustré en FIGURE 4b, en plus de la configuration représentée sur la FIGURE 4a, le premier équipement 402₁ émet une requête de communication avec un autre deuxième équipement de la deuxième zone de sécurité, à savoir avec le deuxième équipement 412₂. Lorsque cette requête est reçue au niveau du dispositif de communication 300, un autre deuxième client de communication, référencée C₂₂, compatible avec le niveau de sécurité du deuxième équipement 412₂ est instancié au niveau de la deuxième machine 302₂ du dispositif 300. Cet autre deuxième client de communication C₂₂ est en communication avec le deuxième équipement 412₂ au travers de la carte réseau 304₂ et de la liaison 416. Ce deuxième client de communication C₂₂ et le premier serveur de communication S₁ sont en communication entre eux au travers du canal de communication 306.

Ainsi, le premier équipement 402₁ peut communiquer :
- avec le deuxième équipement 412₁ en utilisant le premier serveur S₁ commun à toute la première zone de sécurité, et le deuxième client de communication C₂₁ dédié au deuxième équipement 412₁ ; et
- avec le deuxième équipement 412₂ en utilisant le premier serveur S₁ commun à toute la première zone de sécurité, et le deuxième client de communication C₂₂ dédié au deuxième équipement 412₂.

Dans l'exemple illustré en FIGURE 4c, en plus de la configuration représentée sur la FIGURE 4a, le deuxième équipement 412₂ de la deuxième zone de sécurité 414 émet une requête de communication avec le premier équipement 402₃ de la première zone de sécurité 404. Lorsque cette requête est reçue au niveau du dispositif de communication 300 :
- un deuxième serveur de communication S₂ compatible avec le niveau de sécurité du deuxième équipement 412₂ a été instancié au niveau d'une deuxième machine 422₂, différente de la deuxième machine 302₂ du dispositif 300, en utilisant des données de configurations 428₁ mémorisés par ladite deuxième machine 422₂. Alternativement, le deuxième serveur de communication S₂ aurait pu être instancié sur la deuxième machine 302₂ ;
- un premier client de communication C₁₃ compatible avec le niveau de sécurité du premier équipement 402₃ a été instancié au niveau d'une première machine 422₁ différente de la première machine 302₁ du dispositif 300, en utilisant des données de configurations 428₁ mémorisés par ladite deuxième machine 422₂. Alternativement, le premier client de communication C₁₃ aurait pu être instancié sur la première machine 302₁.

Le deuxième serveur de communication S₂ est commun à tous les deuxièmes équipements. Le premier client de communication C₁₃ est dédié au premier équipement 402₃ et ne peut être utilisé que pour communiquer avec ce premier équipement 402₃.

Le deuxième serveur de communication S₂ est en communication avec le deuxième équipement 412₂ au travers de la carte réseau 304₂ et de la liaison 416. Le premier client de communication C₁₃ est en communication avec le premier équipement 402₃ au travers de la carte réseau 304₁ et de la liaison 406. Le deuxième serveur de communication S₁ et le premier client de communication C₁₃ sont en communication entre eux au travers du canal de communication 306.

Ainsi, le deuxième équipement 412₂ peut communiquer avec le premier équipement 402₃ en utilisant le deuxième serveur S₂ et le premier client C₁₃.

De plus, le premier équipement 402₁ peut continuer à communiquer avec le deuxième équipement 412₁ en utilisant le premier serveur S₁ et le deuxième client C₂₁.

Dans les exemples des FIGURES 4a à 4c uniquement deux zones de sécurité 404 et 414 sont illustrées.

Bien entendu, un dispositif selon l'invention n'est pas limité aux communications entre deux zones de sécurité et mettre en œuvre des communications entre un nombre de zones « n », avec n≥2. Ainsi, lorsque le système comprend un nombre « n » de zones de sécurités, le dispositif considère les zones de sécurités deux à deux, et des équipements se trouvant dans ces zones de sécurités peuvent être mis en communication par le dispositif configuré selon l'une quelconque des exemples de configurations décrits précédemment en relation avec les FIGURES 4a à 4c.

Dans ce cas, le dispositif comprend de préférence pour chacune dédites zones de sécurités une cartes réseaux dédiées et associée à ladite zone.

Bien entendu, l'invention n'est pas limitée aux exemples détaillés ci-dessus.

## Revendications

1. Procédé (100;200) de communication client/serveur entre une première zone (404) de sécurité comprenant au moins un équipement, dit premier équipement (402₁,402₂,402₃), et une deuxième zone (414) de sécurité comprenant au moins un équipement, dit deuxième équipement (412₁,412₂,412₃), ledit procédé comprenant les étapes suivantes réalisées au sein d'un dispositif de communication (300) externe auxdits équipements (402₁,402₂,402₃,412₁,412₂,412₃) et intercalé entre lesdites zones de sécurité (404,414) :
- instanciation (102), au niveau d'une machine, dite première machine (302₁), d'un serveur de communication, dit premier serveur de communication (S₁), associé à ladite première zone de sécurité (404), et compatible avec un niveau de sécurité dudit au moins un premier équipement (402₁,402₂,402₃) se trouvant dans ladite première zone de sécurité (404), puis
- lorsqu'un premier équipement (402₁,402₂,402₃) de ladite première zone de sécurité (404) émet une requête de communication avec au moins un deuxième équipement (412₁,412₂,412₃) de ladite deuxième zone de sécurité, ledit au moins un premier équipement (402₁, 402₂, 402₃) pouvant communiquer avec le dispositif de communication (300) en utilisant un protocole de communication industrielle client/serveur, ledit au moins un deuxième équipement (412₁,412₂,412₃) pouvant communiquer avec le dispositif de communication (300) en utilisant un protocole de communication industrielle client/serveur, instanciation (104), au niveau d'une deuxième machine (302₂), d'au moins un client de communication, dit deuxième client de communication (C₂₁,C₂₂), dédié audit au moins un deuxième équipement (412₁,412₂,412₃), de niveau de sécurité compatible avec un niveau de sécurité protocolaire dudit au moins un deuxième équipement (412₁,412₂,412₃), en communication avec ledit premier serveur de communication (S₁) au travers d'un canal de communication (306) utilisant un protocole de communication prédéterminé, dit interne,
- ledit procédé comprenant en outre au niveau du premier serveur de communication (S1), respectivement dudit au moins un deuxième client de communication (C₂₁,C₂₂), une étape de conversion (210) d'un format d'au moins une donnée, de sorte à utiliser un format interne entre ledit premier serveur de communication (S1) et ledit au moins un deuxième client de communication (C₂₁,C₂₂).

2. Procédé (100;200) selon la revendication précédente, **caractérisé en ce que** le premier serveur de communication (S₁) est un serveur de communication, dit commun, prévu pour être en communication avec plusieurs, préférentiellement tous les, premiers équipements (402₁,402₂,402₃) se trouvant dans la première zone de sécurité (404) et compatible avec le niveau de sécurité protocolaire le plus bas parmi les niveaux de sécurité protocolaire utilisés par lesdits premiers équipements (402₁,402₂,402₃) de ladite première zone de sécurité (404).

3. Procédé (100;200) selon l'une quelconque des revendications précédentes, **caractérisé en ce qu'**il comprend une instanciation de plusieurs deuxièmes clients de communication (C₂₁,C₂₂),
- associé à un deuxième équipement (412₁,412₂,412₃) de la deuxième zone de sécurité (414), et
- d'un niveau de sécurité protocolaire compatible avec le niveau de sécurité protocolaire dudit deuxième équipement (412₁,412₂,412₃) ;
- en communication avec le premier serveur de communication (S₁) ;
en vue de mettre en communication un premier équipement (402₁,402₂,402₃) de la première zone de sécurité (404) avec ledit deuxième équipement (412₁,412₂,412₃) de la deuxième zone de sécurité (414).

4. Procédé (100;200) selon l'une quelconque des revendications précédentes, **caractérisé en ce qu'**une configuration du premier serveur de communication (S₁), respectivement une configuration d'au moins un deuxième client de communication (C₁,C₂), au niveau d'une machine est réalisée en utilisant des données de configuration (308) préalablement mémorisées.

5. Procédé (100;200) selon la revendication précédente, **caractérisé en ce qu'**il comprend en outre une génération en fonction des données de configuration (308), d'une table routage (310) définissant au moins une règle de routage de données entre le premier serveur (S₁) et au moins un deuxième client de communication (C₂₁,C₂₂), lors d'une communication entre des équipements (402₁,402₂,402₃,412₁,412₂,412₃) pour laquelle ledit serveur (S₁) et ledit client de communication (C₁,C₂) ont été instanciés.

6. Dispositif (300) de communication client/serveur entre une première zone de sécurité (404) et comprenant au moins un équipement, dite premier équipement (402₁,402₂,402₃), et une deuxième zone de sécurité (414) comprenant au moins un équipement, dit deuxième équipement (412₁,412₂,412₃), ledit dispositif comprenant :
- une première machine (302₁) en communication avec ladite première zone de sécurité (404),
- au moins une deuxième machine (302₂) en communication avec ladite deuxième zone de sécurité (414),
- au moins un canal de communication (306) entre lesdites première (302₁) et deuxième machines (302₂) ;
configurés pour mettre en œuvre toutes les étapes du procédé (100;200) selon l'une quelconque des revendications 1 à 5.

7. Dispositif (100;200) selon la revendication précédente, **caractérisé en ce qu'**au moins une, en particulier chaque, machine (302₁,302₂) est une machine virtuelle.

8. Système (400) de communication comprenant :
- au moins un premier équipement (402₁,402₂,402₃) se trouvant dans une première zone de sécurité (404) et communicant selon un premier niveau de sécurité protocolaire, et au moins un deuxième équipement (412₁,412₂,412₃) se trouvant dans une deuxième zone de sécurité (414) et communicant selon un deuxième niveau de sécurité protocolaire, et
- un dispositif (300) de communication selon l'une quelconque des revendications 6 et 7.

## Patentansprüche

1. Verfahren (100; 200) zur Client/Server-Kommunikation zwischen einer ersten Sicherheitszone (404), umfassend mindestens eine Einrichtung, die sogenannte erste Einrichtung (402₁,402₂,402₃), und einer zweiten Sicherheitszone (414), umfassend mindestens eine Einrichtung, die sogenannte zweite Einrichtung (412₁,412₂,412₃), wobei das Verfahren die folgenden Schritte umfasst, die in einer Kommunikationsvorrichtung (300) außerhalb der Einrichtungen (402₁,402₂,402₃,412₁,412₂,412₃) und zwischen den Sicherheitszonen (404,414) ausgeführt werden:
- Instanziierung (102) im Bereich einer Maschine, der sogenannten ersten Maschine (302₁), eines Kommunikationsservers, dem sogenannten ersten Kommunikationsserver (S₁), der der ersten Sicherheitszone (404) zugeordnet ist, und kompatibel ist mit einem Sicherheitsniveau der mindestens einen ersten Einrichtung (402₁,402₂,402₃), die sich in der ersten Sicherheitszone (404) befindet, dann
- wenn eine erste Einrichtung (402₁,402₂,402₃) der ersten Sicherheitszone (404) eine Kommunikationsanforderung an mindestens eine zweite Einrichtung (412₁,412₂,412₃) der zweiten Sicherheitszone sendet, wobei die mindestens eine erste Einrichtung (402₁, 402₂, 402₃) mit der Kommunikationsvorrichtung (300) unter Verwendung eines industriellen Client/Server-Kommunikationsprotokolls kommunizieren kann, wobei die mindestens eine zweite Einrichtung (412₁,412₂,412₃) mit der Kommunikationseinrichtung (300) unter Verwendung eines industriellen Client/Server-Kommunikationsprotokolls kommunizieren kann, Instanziierung (104) im Bereich einer zweiten Maschine (302₂) mindestens eines Kommunikationsclients, des sogenannten zweiten Kommunikationsclients (C₂₁,C₂₂), der für die mindestens eine zweite Einrichtung (412₁,412₂,412₃) bestimmt ist, auf einem Sicherheitsniveau, das mit einem Protokollsicherheitsniveau der mindestens einen zweiten Einrichtung kompatibel ist (412₁,412₂,412₃), das mit dem ersten Kommunikationsserver (S₁) über einen Kommunikationskanal (306) unter Verwendung eines vorbestimmten, sogenannten internen Kommunikationsprotokolls in Verbindung steht,
- wobei das Verfahren ferner im Bereich des ersten Kommunikationsservers (S1) bzw. des mindestens einen zweiten Kommunikationsclients (C₂₁,C₂₂) einen Schritt (210) zum Konvertieren eines Formats mindestens eines Datenelements umfasst, um ein internes Format zwischen dem ersten Kommunikationsserver (S1) und dem mindestens einen zweiten Kommunikationsclient (C₂₁,C₂₂) zu verwenden.

2. Verfahren (100; 200) nach dem vorstehenden Anspruch, **dadurch gekennzeichnet, dass** der erste Kommunikationsserver (S₁) ein sogenannter gemeinsamer Kommunikationsserver ist, der dazu vorgesehen ist, mit mehreren, vorzugsweise allen ersten Einrichtungen (402₁,402₂,402₃), die sich in der ersten Sicherheitszone (404) befinden, in Verbindung zu stehen, und mit dem niedrigsten Protokollsicherheitsniveau kompatibel ist, das von den ersten Einrichtungen (402₁,402₂,402₃) der ersten Sicherheitszone (404) verwendet wird.

3. Verfahren (100; 200) nach einem der vorstehenden Ansprüche, **dadurch gekennzeichnet, dass** es eine Instanziierung mehrerer zweiter Kommunikationsclients (C₂₁,C₂₂) umfasst,
- einer zweiten Einrichtung (412₁,412₂,412₃) der zweiten Sicherheitszone (414) zugeordnet und
- auf einem Protokollsicherheitsniveau, das mit dem Protokollsicherheitsniveau der zweiten Einrichtung (412₁,412₂,412₃) kompatibel ist;
- in Verbindung mit dem ersten Kommunikationsserver (S₁);
um eine erste Einrichtung (402₁,402₂,402₃) der ersten Sicherheitszone (404) mit der zweiten Einrichtung (402₁,402₂,402₃) der zweiten Sicherheitszone (414) in Verbindung zu bringen.

4. Verfahren (100; 200) nach einem der vorstehenden Ansprüche, **dadurch gekennzeichnet, dass** eine Konfiguration des ersten Kommunikationsservers (S₁) bzw. eine Konfiguration mindestens eines zweiten Kommunikationsclients (C₁,C₂) im Bereich einer Maschine unter Verwendung zuvor gespeicherter Konfigurationsdaten (308) ausgeführt wird.

5. Verfahren (100; 200) nach dem vorstehenden Anspruch, **dadurch gekennzeichnet, dass** es ferner ein Erzeugen einer Führungstabelle (310) in Abhängigkeit von den Konfigurationsdaten (308) umfasst, die mindestens eine Regel für die Datenführung zwischen dem ersten Server (S₁) und mindestens einem zweiten Kommunikationsclient (C₂₁,C₂₂) definiert, während einer Kommunikation zwischen Einrichtungen (402₁,402₂,402₃,412₁,412₂,412₃) für die der Server (S₁) und der Kommunikationsclient (C₁,C₂) instanziiert wurden.

6. Vorrichtung (300) zur Client/Server-Kommunikation zwischen einer ersten Sicherheitszone (404) und umfassend mindestens eine Einrichtung, die sogenannte erste Einrichtung (402₁,402₂,402₃), und eine zweite Sicherheitszone (414), umfassend mindestens eine Einrichtung, die sogenannte zweite Einrichtung (412₁,412₂,412₃), wobei die Vorrichtung umfasst:
- eine erste Maschine (302₁), die mit der ersten Sicherheitszone (404) in Verbindung steht,
- mindestens eine zweite Maschine (302₂), die mit der zweiten Sicherheitszone (414) in Verbindung steht,
- mindestens einen Kommunikationskanal (306) zwischen der ersten (302₁) und der zweiten Maschine (302₂);
konfiguriert, um alle Schritte des Verfahrens (100; 200) nach einem der Ansprüche 1 bis 5 durchzuführen.

7. Vorrichtung (100; 200) nach dem vorstehenden Anspruch, **dadurch gekennzeichnet, dass** mindestens eine, insbesondere jede Maschine (302₁,302₂) eine virtuelle Maschine ist.

8. Kommunikationssystem (400), umfassend:
- mindestens eine erste Einrichtung (402₁,402₂,402₃), die sich in einer ersten Sicherheitszone (404) befindet und gemäß einem ersten Protokollsicherheitsniveau kommuniziert, und mindestens eine zweite Einrichtung (412₁,412₂,412₃), die sich in einer zweiten Sicherheitszone (414) befindet und gemäß einem zweiten Protokollsicherheitsniveau kommuniziert, und
- eine Kommunikationsvorrichtung (300) nach einem der Ansprüche 6 und 7.

## Claims

1. Method (100; 200) for client/server communication between a first security zone (404) comprising at least one piece of equipment, referred to as a first piece of equipment (402₁, 402₂, 402₃), and a second security zone (414) comprising at least one piece of equipment, referred to as a second piece of equipment (412₁, 412₂, 412₃), said method comprising the following steps carried out within a communication device (300) which is external to said equipment (402₁, 402₂, 402₃, 412₁, 412₂, 412₃) and positioned between said security zones (404, 414):
- instantiating (102), on a machine, referred to as a first machine (302₁), a communication server, referred to as a first communication server (S₁), which is associated with said first security zone (404) and compatible with a security level of said at least one first piece of equipment (402₁, 402₂, 402₃) located in said first security zone (404), then
- when a first piece of equipment (402₁, 402₂, 402₃) of said first security zone (404) sends a communication request to at least one second piece of equipment (412₁, 412₂, 412₃) of said second security zone, said at least one first piece of equipment (402₁, 402₂, 402₃) being able to communicate with the communication device (300) using an industrial client/server communication protocol, said at least one second piece of equipment (412₁, 412₂, 412₃) being able to communicate with the communication device (300) using an industrial client/server communication protocol, instantiating (104), on a second machine (302₂), at least one communication client, referred to as a second communication client (C₂₁, C₂₂), dedicated to said at least one second piece of equipment (412₁, 412₂, 412₃), of a security level that is compatible with a protocol security level of said at least one second piece of equipment (412₁, 412₂, 412₃), in communication with said first communication server (S₁) through a communication channel (306) using a so-called internal predetermined communication protocol,
- said method further comprising on the first communication server (S1), respectively of said at least one second communication client (C₂₁, C₂₂), a step of converting (210) a format of at least one data item, so as to use an internal format between said first communication server (S1) and said at least one second communication client (C₂₁, C₂₂).

2. Method (100; 200) according to the preceding claim, **characterized in that** the first communication server (S₁) is a so-called common communication server, designed to be in communication with multiple, preferably all, first pieces of equipment (402₁, 402₂, 402₃) located in the first security zone (404) and compatible with the lowest protocol security level from among the protocol security levels used by said first pieces of equipment (402₁, 402₂, 402₃) of said first security zone (404).

3. Method (100; 200) according to any one of the preceding claims, **characterized in that** it comprises instantiating multiple second communication clients (C₂₁, C₂₂),
- associated with a second piece of equipment (412₁, 412₂, 412₃) of the second security zone (414), and
- of a protocol security level compatible with the protocol security level of said second piece of equipment (412₁, 412₂, 412₃);
- in communication with the first communication server (S₁);
in order to establish communication between a first piece of equipment (402₁, 402₂, 402₃) of the first security zone (404) and said second piece of equipment (412₁, 412₂, 412₃) of the second security zone (414).

4. Method (100; 200) according to any one of the preceding claims, **characterized in that** a configuration of the first communication server (S₁), respectively a configuration of at least one second communication client (C₁, C₂), on a machine is carried out using previously stored configuration data (308).

5. Method (100; 200) according to the preceding claim, **characterized in that** it further comprises generating, as a function of the configuration data (308), a routing table (310) defining at least one data routing rule between the first server (S₁) and at least one second communication client (C₂₁, C₂₂), during a communication between equipment (402₁, 402₂, 402₃, 412₁, 412₂, 412₃) for which said server (S₁) and said communication client (C₁, C₂) have been instantiated.

6. Device (300) for client/server communication between a first security zone (404) comprising at least one piece of equipment, referred to as a first piece of equipment (402₁, 402₂, 402₃), and a second security zone (414) comprising at least one piece of equipment, referred to as a second piece of equipment (412₁, 412₂, 412₃), said device comprising:
- a first machine (302₁) in communication with said first security zone (404),
- at least one second machine (302₂) in communication with said second security zone (414),
- at least one communication channel (306) between said first machine (302₁) and second machine (302₂);
which are configured to implement all the steps of the method (100; 200) according to any one of claims 1 to 5.

7. Device (100; 200) according to the preceding claim, **characterized in that** at least one, in particular each, machine (302₁, 302₂) is a virtual machine.

8. Communication system (400) comprising:
- at least one first piece of equipment (402₁, 402₂, 402₃) located in a first security zone (404) and communicating according to a first protocol security level, and at least one second piece of equipment (412₁, 412₂, 412₃) located in a second security zone (414) and communicating according to a second protocol security level, and
- a communication device (300) according to any one of claims 6 and 7.
